# FASCICULE DE BREVET EUROPEEN

(11) **EP 4 341 214 B1**
(45) Date de publication et mention de la délivrance du brevet: **09.04.2025**
(21) Numéro de dépôt: 22729639.9
(22) Date de dépôt: 19.05.2022
(51) Int. Cl.: C01C 1/28

(54) **PROCÉDÉ DE PRODUCTION D´AZOTE AMMONIACAL**
VERFAHREN ZUR HERSTELLUNG VON AMMONIAKSTICKSTOFF
METHOD FOR PRODUCING AMMONIA NITROGEN

(30) Priorité: 20.05.2021 FR 2105295
(43) Date de publication de la demande: 27.03.2024
(73) Titulaire: Centre National de la Recherche Scientifique, 75016 Paris (FR); Université Toulouse III-Paul Sabatier, 31062 Toulouse Cedex 9 (FR)
(72) Inventeur: MEZAILLES, Nicolas, 31062 TOULOUSE Cedex 9 (FR); BENNAAMANE, Soukaina, 31062 TOULOUSE Cedex 9 (FR)
(74) Mandataire: IPAZ
(86) Numéro de dépôt international: PCT/EP2022/063538
(87) Numéro de publication internationale: WO 2022/243417

(56) Documents cités:
- US-A- 6 037 459
- LÉGARÉ MARC-ANDRÉ ET AL: "One-pot, room-temperature conversion of dinitrogen to ammonium chloride at a main-group element", NATURE CHEMISTRY, NATURE PUBLISHING GROUP UK, LONDON, vol. 12, no. 11, 14 September 2020 (2020-09-14), pages 1076 - 1080, XP037277844, ISSN: 1755-4330, [retrieved on 20200914], DOI: 10.1038/S41557-020-0520-6

## Description

La présente invention concerne un procédé de production d'azote ammoniacal mettant en œuvre la réduction de diazote en présence d'un composé (I) comprenant au moins un élément du groupe 13 du tableau périodique, et d'un agent réducteur ; et l'utilisation dudit composé (I) pour la réduction du diazote.

L'azote (N) joue un rôle essentiel dans la composition de la matière vivante. Il est notamment l'un des constituants majeurs des acides aminés, des protéines dont les enzymes, et des acides nucléiques composant les ADN et ARN. Il est également un élément nutritif essentiel à la croissance des cultures. Cependant, même si l'azote est très abondant à la surface du globe (il y a plus d'azote que de carbone, d'hydrogène et de phosphore réunis dans l'ensemble constitué par la biosphère, l'hydrosphère et l'atmosphère), il est présent essentiellement sous la forme d'un gaz extrêmement stable, le diazote (N₂). L'homme ne peut donc que marginalement tirer profit d'une telle abondance. Seuls des microorganismes tels que les Rhizobia impliqués dans la fixation symbiotique d'azote par les légumineuses, sont capables d'utiliser cette forme d'azote et de la transformer en azote ammoniacal puis organique, qui pourra à son tour être utilisé par d'autres êtres vivants et transformé en d'autres formes d'azote réactives.

Pour répondre à une demande accrue en azote réactif pour la production alimentaire à partir de la révolution industrielle à la fin du 19^{ème} siècle, deux processus principaux sont venus modifier drastiquement ce paysage de l'azote réactif. Tout d'abord, l'utilisation de plus en plus massive de combustibles fossiles (charbon, pétrole, gaz naturel, ...) pour la production d'énergie, les transports, l'industrie et les activités domestiques est venue augmenter fortement les quantités d'azote oxydé présentes dans l'environnement. Le deuxième processus qui a été le plus déterminant est le procédé Haber-Bosch permettant la synthèse d'ammoniac à l'échelle industrielle, à partir de diazote et de dihydrogène (H₂) en présence d'un catalyseur solide à base notamment de fer. La production d'ammoniac NH₃ d'environ 200 millions de tonnes/an par ce procédé a dépassé quantitativement la fixation symbiotique depuis la fin du 20^{ème} siècle à l'échelle globale et il est toujours exploité de nos jours. Cependant, ce procédé Haber-Bosch présente les désavantages suivants : il met en œuvre des pressions et températures élevées, par exemple des pressions comprises entre 100 et 300 bars et des températures comprises entre 300 et 550°C, rendant ce procédé extrêmement consommateur d'énergie, nécessitant une production centralisée et sécurisée, et impliquant un coût d'opération et un coût de transport élevés. Par ailleurs, un tel procédé est générateur de quantités de dioxyde de carbone très importantes (environ 1,5% de la production globale de CO₂) induisant des problématiques environnementales, et son rendement reste faible (20%).

Des recherches ont été menées sur des procédés de production d'ammoniac mettant en œuvre des conditions plus douces telles que la réduction électrochimique qui consiste à appliquer un potentiel électrique à un électrocatalyseur à base de métaux nobles tels que l'or ou le ruthénium. Cependant, les rendements restent faibles et les matières premières sont rares et extrêmement coûteuse. D'autres procédés ont été mis au point et utilisent des complexes ou composés organométalliques de métaux de transition. En particulier, le brevet US 6,037,459 décrit un procédé comprenant une étape de mise en contact avec du diazote d'un composé répondant à la formule M(NR₁R₂)₃ dans laquelle M est un métal de transition (e.g. molybdène), R₁ et R₂ sont choisis parmi les groupes alkyle tertiaire, les groupes phényle et les groupes phényle substitué, pour former un complexe métallique avec des ligands nitrures ; et une étape de réduction dudit complexe en présence d'une source d'hydrogène pour former de l'ammoniac. Ce procédé est effectué dans des conditions de température et de pression ambiantes. Toutefois, le brevet US 6,037,459 décrit des rendements faibles et la formation d'ammoniac n'est pas démontrée. D'autre part, Légaré, MA. et al., Nat. Chem. 12, 1076-1080, divulgue un procédé de production de NH4Cl comprenant une étape de mise en contact de diazote avec (a) un composé répondant à la formule R1R2MY dans laquelle M est le bore B, Y est le brome Br, R1 est le 2,3,5,6-tetraméthylphényle et R2 est le 1-(2,6-diisopropylphényle)-3,3,5,5 tétramétylpyrrolidine-2-ylidène, ainsi qu'avec un mélange (b) de KC8/B(OH)3,et (c) de toluène comme solvant organique. Cette étape est suivie d'une étape d'hydrolyse avec de l'acide chlorhydrique.

Le but de la présente invention est par conséquent de pallier les inconvénients de l'art antérieur et notamment de fournir un procédé de production d'azote ammoniacal simple, économique, industrialisable, utilisant des matières premières abondantes, éventuellement pouvant être recyclées, et qui permet de réduire les émissions carbone.

L'invention a pour premier objet un procédé de production d'azote ammoniacal, caractérisé en ce qu'il comprend au moins les étapes suivantes :
i) une étape de mise en contact d'une composition comprenant un composé répondant à une formule (I) suivante : R¹R²MY (I), un agent réducteur, et un solvant organique, avec du diazote (N₂),
   ladite formule (I) étant telle que :
   - M est un élément du groupe 13 du tableau périodique, de préférence choisi parmi le bore, l'aluminium, et un de leurs mélanges,
   - R¹ et R², identiques ou différents, sont choisis parmi un groupe alkyle, un groupe aryle, un groupe aryl-alkyle, un groupe -OR, et un groupe -SR, R étant un groupe alkyle, un groupe aryle, ou un groupe aryl-alkyle, et
   - Y est un groupe choisi parmi un halogène -X, un groupe -OR³, un groupe -SR³, un groupe triflate, un groupe mésylate, et un groupe triflimidate, R³ étant un groupe alkyle, un groupe aryle, ou un groupe aryl-alkyle, et
ii) une étape d'hydrolyse en milieu acide.

Le procédé de l'invention est simple, facile à mettre en œuvre, économique, et permet l'obtention d'azote ammoniacal dans des conditions réactionnelles relativement douces. En particulier, l'utilisation d'un composé de formule (I) tel que défini ci-dessus permet l'activation en milieu réducteur de la liaison triple du diazote et de former des espèces intermédiaires qui conduisent ensuite par hydrolyse à de l'azote ammoniacal. Enfin, le procédé est industrialisable, utilise des matières premières abondantes, éventuellement pouvant être recyclées, et permet de réduire l'impact environnemental.

### Etape i)

### Le composé de formule (I) R¹R²MY

Selon l'invention, le bore est particulièrement préféré en tant qu'élément M.

Le composé de formule (I) R¹R²MY n'est pas un composé radicalaire.

Dans le composé de formule (I), R¹ forme une liaison covalente simple avec l'élément M et R² forme une liaison covalente simple avec l'élément M.

### Les groupes R¹ et R²

R¹ et R², identiques ou différents, sont choisis parmi un groupe alkyle, un groupe aryle, un groupe aryl-alkyle, un groupe -OR, et un groupe -SR, R étant un groupe alkyle, un groupe aryle, ou un groupe aryl-alkyle.

Un groupe alkyle en tant que groupe R¹ et/ou R² peut être linéaire ou ramifié, cyclique ou non cyclique. Le groupe alkyle peut comprendre de 1 à 14 atomes de carbone, et de préférence de 2 à 10 atomes de carbone. Un groupe alkyle est de préférence choisi parmi les groupes éthyle, propyle, isopropyle, cyclohexyle, bicyclo[2.2.1]-2-heptyle, et isopinocamphéyle. Parmi de tels groupes, on préfère tout particulièrement l'un quelconque des groupes cyclohexyle, bicyclo[2.2.1]-2-heptyle, ou isopinocamphéyle.

Le groupe alkyle en tant que groupe R¹ et/ou R² peut comprendre un ou plusieurs hétéroatomes, tels qu'un atome d'oxygène, ou un atome de soufre, étant entendu qu'un atome de carbone du groupe alkyle est directement lié à l'élément M de la formule (I) et qu'aucun des hétéroarome(s) présent(s) dans le groupe alkyle n'est directement lié de façon covalente à un autre hétéroatome.

Un groupe aryle en tant que groupe R¹ et/ou R² peut être substitué ou non substitué. Le groupe aryle peut comprendre de 6 à 30 atomes de carbone, et de préférence de 6 à 18 atomes de carbone. Un groupe aryle est de préférence choisi parmi un groupe phényle, un groupe -C₆F₅, un groupe 2,4,6-(Me)₃-C₆H₂, et un groupe 2,4,6-(iPr)₃-C₆H₂. Parmi de tels groupes, on préfère tout particulièrement l'un quelconque des groupes 2,4,6-(Me)₃-C₆H₂ ou 2,4,6-(iPr)₃-C₆H₂.

Le groupe aryle en tant que groupe R¹ et/ou R² peut comprendre un ou plusieurs hétéroatomes, notamment lorsque le groupe aryle est substitué (i.e. dans les substituants dudit groupe aryle), tels qu'un atome d'oxygène ou un atome d'azote, étant entendu qu'un atome de carbone du groupe aryle est directement lié à l'élément M de la formule (I).

Un groupe aryl-alkyle en tant que groupe R¹ et/ou R² est un groupe comprenant au moins un groupe alkyle et au moins un groupe aryle qui sont liés directement par une liaison covalente carbone (du groupe aryle)-carbone (du groupe alkyle), ou par l'intermédiaire d'un atome d'oxygène ou d'un atome d'azote, les groupes aryle et alkyle étant tels que définis précédemment pour les groupes R¹ et R². Le groupe alkyle-aryle peut être directement lié à l'élément M de la formule (I) par un atome de carbone du groupe aryle ou par un atome de carbone du groupe alkyle.

Un groupe R alkyle du groupe -OR ou -SR peut être linéaire ou ramifié, cyclique ou non cyclique. Le groupe R alkyle peut comprendre de 1 à 10 atomes de carbone, et de préférence de 1 à 4 atomes de carbone.

Un groupe R aryle du groupe -OR ou -SR peut être substitué ou non substitué. Le groupe R aryle peut comprendre de 6 à 30 atomes de carbone, et de préférence de 6 à 18 atomes de carbone. Un groupe R aryle est de préférence choisi parmi un groupe phényle, un groupe naphtyle, un groupe anthracényle ou un groupe pyrényle.

Un groupe R aryl-alkyle du groupe -OR ou -SR est un groupe comprenant au moins un groupe alkyle et au moins un groupe aryle qui sont liés directement par une liaison covalente carbone (du groupe aryle)-carbone (du groupe alkyle) ou par l'intermédiaire d'un atome d'oxygène, ou d'un atome de soufre, les groupes aryle et alkyle étant tels que définis précédemment pour le groupe R.

Les groupes R¹ et R² peuvent être liés de façon covalente, notamment *via* une liaison carbone-carbone, pour former ensemble un groupe divalent, lesdits groupes R¹ et R² étant tels que définis précédemment. Dans ce mode de réalisation, le groupe divalent ne forme pas un cycle plan avec l'élément M.

À titre d'exemple, le groupe divalent peut être un groupe alkyle (i.e. R¹ et R² sont des groupes alkyles), et de préférence un groupe 9-bicyclo[3.3.1]nonane.

Selon une forme de réalisation de l'invention, R¹ et R², identiques ou différents, sont choisis parmi un groupe alkyle, un groupe aryle, et un groupe aryl-alkyle.

Selon une forme de réalisation préférée de l'invention, au moins l'un des groupes R¹ et R² est un groupe alkyle, et de façon plus particulièrement préférée, les deux groupes R¹ et R² sont des groupes alkyle.

Selon une forme de réalisation particulièrement préférée de l'invention, R¹ et R² sont identiques.

Les groupes R¹ et R² du composé (I) sont des groupes non stabilisants. En d'autres termes, ils ont pour fonction de ne pas stabiliser le radical R¹R²M° généré au cours du procédé, et par conséquent de le rendre plus réactif vis-à-vis du diazote N₂.

### Le groupe Y

Y est un groupe choisi parmi un halogène -X, un groupe -OR³, un groupe -SR³, un groupe triflate (-OSO₂CF₃), un groupe mésylate (-OSO₂CH₃), et un groupe triflimidate (NTf₂ ou N(SO₂CF₃)₂), R³ étant un groupe alkyle, aryle, ou aryl-alkyle.

X est de préférence un atome de chlore ou un atome de brome, et de façon particulièrement préférée un atome de chlore.

Un groupe R³ alkyle peut être linéaire ou ramifié, cyclique ou non cyclique. Le groupe R³ alkyle peut comprendre de 1 à 10 atomes de carbone, et de préférence de 1 à 4 atomes de carbone.

Un groupe R³ aryle peut être substitué ou non substitué. Le groupe R³ aryle peut comprendre de 6 à 30 atomes de carbone, et de préférence de 6 à 18 atomes de carbone. Un groupe R³ aryle est de préférence choisi parmi les groupes phényle, 2,4,6-(Me)₃-C₆H₂, 2,4,6-(iPr)₃-C₆H₂ et naphtyle.

Un groupe R³ aryl-alkyle est un groupe comprenant au moins un groupe alkyle et au moins un groupe aryle qui sont liés directement par une liaison covalente carbone (du groupe aryle)-carbone (du groupe alkyle) ou par l'intermédiaire d'un atome d'oxygène, ou d'un atome de soufre, les groupes aryle et alkyle étant tels que définis précédemment pour le groupe R³.

Y est de préférence un halogène X.

Le groupe Y du composé (I) est un groupe ayant des propriétés nucléofuges. En d'autres termes, il a pour fonction de faciliter la formation du radical R¹R²M°.

Selon une forme de réalisation particulièrement préférée de l'invention, le composé de formule (I) est choisi parmi les dialkylchloroboranes, les dialkylbromoboranes, les composés dialkylchloroaluminium, et les composés dialkylbromoaluminium, tels que les halogénures de diisopinocamphéylborane, de dicyclohexylborane, ou de bis(bicyclo[2.2.1]-2-heptyl)borane, ou les halogénoboranes à base de 9-borabicyclo[3.3.1]nonane.

Le composé de formule (I) présente les avantages d'être facilement disponible commercialement ou d'être facilement accessible par voie synthétique.

Le composé de formule (I) présente les caractéristiques d'un acide de Lewis, à savoir une entité chimique dont un des atomes la constituant possède une lacune électronique.

L'agent réducteur peut être choisi parmi le potassium, le sodium, les amalgames à base de mercure et de sodium, le lithium, et un de leurs mélanges ; et de préférence le potassium.

L'utilisation d'un amalgame permet de peser plus facilement la quantité d'agent réducteur à utiliser dans l'étape i).

Le solvant organique peut être un solvant organique conventionnel, un liquide ionique, ou un mélange.

Un liquide ionique est bien connu de l'homme du métier et peut être considéré comme un sel fondu à température ambiante (e.g. 18-25°C). Le liquide ionique possède une partie cationique organique et joue le rôle de solvant dans la présente invention, au même titre qu'un solvant organique conventionnel.

Dans l'invention, on entend par solvant organique conventionnel, un solvant organique exempt de sel ou qui n'est pas sous la forme d'un sel.

Le solvant organique de l'étape i) est de préférence choisi parmi les solvants organiques aprotiques.

Selon une forme de réalisation de l'invention, le solvant organique de l'étape i) est choisi parmi les solvants organiques aprotiques apolaires (en tant que solvants organiques conventionnels), les liquides ioniques, et un de leurs mélanges.

Selon une première variante de cette forme de réalisation, le solvant organique de l'étape i) est choisi parmi les solvants organiques aprotiques apolaires.

Selon une deuxième variante de cette forme de réalisation, le solvant organique de l'étape i) est choisi parmi les liquides ioniques.

Le solvant organique aprotique apolaire de l'étape i) est de préférence choisi parmi le THF (tétrahydrofurane), et le méthyl-THF.

Le liquide ionique de l'étape i) est de préférence choisi parmi les sels d'ammonium, les sels d'imidazolium, les sels de phosphonium, les sels de pyrrolidinium, et les sels de pipéridinium, et de façon particulièrement préférée parmi les sels d'alkylammonium, les sels d'alkylimidazolium, les sels d'alkylphosphonium, les sels d'alkylpyrrolidinium, et les sels d'alkylpipéridinium.

Le liquide ionique de l'étape i) comprend de préférence une partie anionique de type bis(trifluorométhanesulfonyl)imidate.

À titre d'exemples de liquides ioniques, on peut citer le bis(trifluorométhanesulfonyl)imidate de triéthylbutylammonium, le bis(trifluorométhanesulfonyl)imidate de 1-butyl-3-méthylimidazolium, le bis(trifluorométhanesulfonyl)imidate de 1-éthyl-3-méthylimidazolium, le bis(trifluorométhanesulfonyl)imidate de triméthylbutylammonium, le bis(trifluorométhanesulfonyl)imidate de 1-butyl-1-méthylpyrrolidinium, le bis(trifluorométhanesulfonyl)imidate de N-propyl-N-méthylpyrrolidinium, ou le bis(trifluorométhanesulfonyl)imidate de 1-butyl-3- méthylimidazolium.

Le liquide ionique est de préférence non miscible dans l'eau. Cela permet ainsi de faciliter les purifications ultérieures.

Au cours de l'étape i), la composition comprenant le composé de formule (I), l'agent réducteur, et le solvant organique, est mise en contact avec du diazote (N₂).

L'étape i) est effectuée en milieu sec ou anhydre. En d'autres termes, l'étape i) est de préférence réalisée en boite à gants ou dans un dispositif approprié pour éviter le contact avec l'air et/ou l'humidité.

En effet, le contact avec l'humidité et/ou l'air entraîne la formation de produits secondaires tels que H₂, et/ou R¹R²MOMR¹R².

L'étape i) peut durer de 1 h à 20 h environ, et de préférence de 2 h à 12 h environ.

L'étape i) est effectuée de préférence à une température allant de -80°C à 60°C environ, et de façon particulièrement préférée de 0°C à 30°C environ.

L'étape i) est de préférence mise en œuvre sous agitation, par exemple à l'aide d'un agitateur mécanique ou magnétique. L'agitation permet de favoriser le contact de la composition avec le diazote, et ainsi de favoriser la réaction.

Afin de permettre la réaction entre le diazote et le composé (I), la réaction est effectuée de préférence sous atmosphère de diazote, notamment de diazote sec.

L'étape i) peut être effectuée à une pression allant de 0,1 bar à 200 bars environ, et de préférence de 1 bar à 100 bars. Une pression d'au moins 20 bars, et de préférence d'au moins 40 bars, est avantageuse pour améliorer le rendement en azote ammoniacal. Une pression d'1 bar est avantageuse sur le plan industriel.

L'agent réducteur utilisé dans l'étape i) peut représenter de 0,1% à 20% en poids, et de préférence de 0,1% à 10% en poids, par rapport au poids total de la composition.

Le composé de formule (I) utilisé dans l'étape i) peut représenter de 0,1% à 10% en poids, et de préférence de 2% à 6% en poids, par rapport au poids total de la composition.

Au cours de l'étape i), le composé (I) réagit avec le diazote pour former une ou plusieurs espèces à base d'azote et de l'élément M, en particulier de formule (II) suivante : N(MR¹R²)₃₋ₓHₓ, x étant un nombre entier allant de 0 à 3.

La formation d'une ou plusieurs espèces à base d'azote et de l'élément M telles que définies ci-dessus s'explique notamment par la conduite d'une réaction radicalaire en chaîne mettant en œuvre un ou plusieurs radicaux au moins à base de l'élément M qui sont suffisamment instables pour réagir avec l'azote du diazote.

De manière surprenante, le composé (I) de par sa formule (I) et ainsi la définition de Y, M, R¹ et R², a la faculté d'activer la liaison triple du diazote en milieu réducteur et de minimiser, voire d'éviter la dimérisation du radical.

### Etape ii)

Au cours de l'étape ii), les espèces à base d'azote et de l'élement M sont hydrolysées en milieu acide pour former de l'azote ammoniacal.

Dans l'invention, l'azote ammoniacal regroupe les deux formes les plus réduites d'azote : l'ammonium (NH₄⁺) et l'ammoniac (NH₃). L'azote ammoniacal est par conséquent choisi parmi l'ammonium (NH₄⁺), l'ammoniac (NH₃), et leur mélange. De manière générale, selon les conditions de l'étape ii), et notamment de la quantité d'acide, on obtiendra de l'ammonium (excès d'acide) ou de l'ammoniac (quantités stoechiométriques par rapport à N(MR¹R²)₃₋ₓHₓ).

L'étape ii) d'hydrolyse en milieu acide peut être mise en œuvre par mise en contact d'un brut de réaction obtenu à l'étape i) précédente avec une solution acide ou avec un acide gazeux (sous la forme d'un gaz).

La solution acide peut comprendre un solvant aqueux (e.g. eau) et au moins un acide tel que l'acide chlorhydrique, l'acide bromohydrique, l'acide sulfurique, ou l'acide nitrique, ou un solvant organique aprotique et au moins un acide tel que l'acide chlorhydrique, l'acide bromohydrique, l'acide sulfurique, ou l'acide nitrique.

Le solvant organique aprotique peut être choisi parmi les éthers tels que l'éther diéthylique ou le dioxane, et les alcanes tels que l'hexane ou l'heptane.

L'acide gazeux peut être de l'acide chlorhydrique gazeux.

L'étape ii) conduit avantageusement à de l'ammonium, notamment lorsque l'acide est utilisé en excès par rapport au composé de formule (I).

Le solvant aqueux est de préférence de l'eau.

La solution acide peut avoir un pH allant de 0 à 6 environ.

L'étape ii) peut durer de 1 min à 30 min environ, et de préférence de 2 min à 10 min environ. L'étape ii) est une étape très rapide, presque instantanée.

L'étape ii) est effectuée de préférence à une température allant de -20°C à 40°C environ, et de façon particulièrement préférée de 0°C à 20°C environ.

L'étape ii) est de préférence mise en œuvre sous agitation.

L'étape ii) est de préférence effectuée à la pression atmosphérique.

L'étape ii) permet de conduire à de l'ammoniac NH₃ et/ou de l'ammonium NH₄⁺.

### Autres étapes du procédé

Le procédé peut comprendre en outre après l'étape i) et avant l'étape ii), une étape i') au cours de laquelle le solvant organique est retiré.

Ce mode de réalisation est particulièrement adapté lorsque le solvant organique est un solvant organique conventionnel.

L'étape i') peut être effectuée par évaporation du solvant organique conventionnel.

Le procédé peut comprendre une étape i") de purification après l'étape i) ou l'étape i') si elle existe. Cette étape i") permet d'enlever au moins une partie des produits secondaires (e.g. sels) éventuellement formés lors de l'étape i). En d'autres termes, l'étape i") permet de séparer la ou les espèces à base d'azote et de l'élément M formées à l'étape i), des sels.

L'étape i") peut être effectuée par extraction d'un mélange réactionnel formé à l'étape i) ou l'étape i') si elle existe, notamment à l'aide d'un solvant organique apolaire. La ou les espèces à base d'azote et de l'élément M formées à l'étape i) sont solubles dans ledit solvant organique apolaire et peuvent être séparées des sels par filtration.

Le solvant organique apolaire peut être choisi parmi les alcanes tels que l'hexane, le pentane, ou l'heptane.

Le solvant organique apolaire préféré est le pentane.

Lorsque le solvant organique de l'étape i) est un solvant organique conventionnel, l'étape i") de purification peut être effectuée après l'étape i) ou l'étape i'), en particulier par extraction d'un mélange réactionnel formé à l'étape i) ou à l'étape i') comme explicité ci-dessus.

Lorsque le solvant organique de l'étape i) est un liquide ionique, l'étape i") de purification peut être effectuée après l'étape i), en particulier par extraction d'un mélange réactionnel formé à l'étape i) comme explicité ci-dessus.

Le procédé peut comprendre en outre avant l'étape i), une étape i0) de préparation du composé de formule (I).

Le composé de formule (I) peut être préparé selon un protocole de double hydroboration ou d'hydroalumination tel que décrit dans les articles suivants : H. C. Brown, N. Ravindran, J. Am. Chem. Soc. 1976, 98, 1798-1806 **et** H. C. Brown, N. Ravindran, J. Am. Chem. Soc. 1976, 98, 1785-1798 ; ou selon la réaction de deux équivalents d'alcène avec un équivalent d'un mono-halogénoborane (e.g. répondant à la formule YBH₂ dans laquelle Y est tel que défini dans l'invention) dans du THF ou du diethyl éther, à température ambiante.

De manière générale, un équivalent du composé MH₂Y réagit avec deux équivalents d'un alcène R'CH=CH₂ pour former le composé (R'CH₂CH₂)₂MY.

Le procédé de l'invention ne met de préférence pas en œuvre d'autres espèces gazeuses que le diazote (N₂) comme réactif de départ.

Le procédé peut comprendre en outre une étape iii) de recyclage du composé (I). Dans ce mode de réalisation, l'étape ii) est de préférence conduite par mise en contact sous atmosphère inerte du brut de réaction obtenu à l'étape i), i') ou i") précédente avec une solution acide comprenant un solvant organique aprotique et au moins un acide, ou avec un acide gazeux, ladite solution acide et ledit acide gazeux étant tels que définis ci-dessus.

L'étape iii) peut être alors effectuée après l'étape ii) de la façon suivante :
- lorsque le solvant organique est un solvant organique conventionnel : par exemple en retirant les solvants des étapes i), i"), et ii) s'ils existent, de préférence par évaporation, et en utilisant un solvant organique apolaire pour précipiter NH₄⁺ et séparer/récupérer le composé (I) ; ou
- lorsque le solvant organique est un liquide ionique : par exemple en retirant les solvants des étapes i") et ii) s'ils existent, et en utilisant un système de distillation pour récupérer NH₃ et séparer/récupérer le composé (I).

Le solvant organique apolaire peut être tel que défini précédemment.

L'invention a pour deuxième objet l'utilisation d'un composé de formule (I) telle que définie dans l'invention, pour la réduction du diazote.

### Exemples

### Exemple 1 : procédé de production d'azote ammoniacal à partir de diazote mettant en œuvre le dicyclohexylchloroborane en tant que composé de formule (i)

120 mg d'une solution de dicyclohexylchloroborane (1M dans l'hexane) commercialisée sous la référence 411124 par la société Sigma-Aldrich ont été ajoutés à 4 ml de tétrahydrofurane anhydre, suivis de 15 mg de potassium. La composition résultante a été mise sous atmosphère de diazote pur et sec et sous agitation pendant 12 heures. À la fin de la réaction, la couleur du mélange est marron. Un excès de HCl (2 M) dans Et₂O a été ajouté sous atmosphere inerte permettant la conversion quantitive de Hₓ-N(BCy₂)₃₋ₓ en NH₄⁺ et Cy₂BCl. Les solvants et composés volatils sont éliminés par évaporation, laissant un résidu solide. Ce solide est extrait avec de l'hexane, permettant la séparation de Cy₂BCl de NH₄⁺.

NH₄⁺ est obtenu sous la forme d'un solide blanc. Le rendement par rapport à Cy₂BCl initialement introduit est de 38%.

### Exemple 2 : procédé de production d'azote ammoniacal à partir de diazote mettant en œuvre le (+)-B-Chlorodiisopinocamphéylborane en tant que composé de formule (I)

48 mg de (+)-B-Chlorodiisopinocampheylborane (Ipc₂BCl) commercialisée sous la référence 317012 par la société Sigma-Aldrich ont été ajoutés à 4 mL de tétrahydrofurane anhydre, suivis de 15 mg de potassium. La composition résultante a été mise sous atmosphère de diazote pur et sec et sous agitation pendant 12 heures. À la fin de la réaction, la couleur du mélange est marron. Un excès de HCl (2 M) dans Et₂O a été ajouté sous atmosphere inerte permettant la conversion quantitive de Hₓ-N(BIpc₂)₃₋ₓ en NH₄⁺ et Cy₂BCl. Les solvants et composés volatils sont éliminés par évaporation, laissant un résidu solide. Ce solide est extrait avec de l'hexane, permettant la séparation de Ipc₂BCl de NH₄⁺.

NH₄⁺ est obtenu sous la forme d'un solide blanc. Le rendement par rapport à Ipc₂BCl initialement introduit est de 15%.

### Exemple 3 : procédé de contrôle (ne faisant pas partie de l'invention)

120 mg d'une solution de dicyclohexylchloroborane (1M dans l'hexane) commercialisée sous la référence sous la référence 411124 par la société Sigma-Aldrich ont été ajoutés à 4 mL de tétrahydrofurane anhydre, suivis de 15 mg de potassium. La composition résultante a été mise sous atmosphère d'argon pur et sec et sous agitation pendant 12 heures. Un excès de HCl (2 M) dans Et₂O a été ajouté sous atmosphère inerte. Aucune formation de NH₄⁺ n'a été observée.

### Exemple 4 : procédé de contrôle (ne faisant pas partie de l'invention)

Une suspension de 15 mg de potassium dans 4 mL de tétrahydrofurane anhydre a été agitée sous atmosphère de diazote pur et sec pendant 12 heures. Un excès de HCl (2 mol/l) dans Et₂O a été ajouté sous atmosphère inerte. Aucune formation de NH₄⁺ n'a été observée.

### Exemple 5 : procédé de production d'azote ammoniacal à partir de diazote mettant en œuvre le bis(bicyclo[2.2.1]-2-heptyl)chloroborane en tant que composé de formule (I)

38 mg d'une solution de Bis(bicyclo[2.2.1]-2-heptyl)chloroborane commercialisée sous la référence 771880 par la société Sigma-Aldrich ont été ajoutés à 4 ml de tétrahydrofurane anhydre, suivis de 15 mg de potassium. La composition résultante a été mise sous atmosphère de diazote pur et sec et sous agitation pendant 12 heures. À la fin de la réaction, la couleur du mélange est marron. Un excès de HCl (2 M) dans Et₂O a été ajouté sous atmosphere inerte permettant la conversion quantitive de Hₓ-N(BBCH₂)₃₋ₓ en NH₄⁺ et BCH₂BCl. Les solvants et composés volatils sont éliminés par évaporation, laissant un résidu solide. Ce solide est extrait avec de l'hexane, permettant la séparation de BCH₂BCl de NH₄⁺.

NH₄⁺ est obtenu sous la forme d'un solide blanc. Le rendement par rapport à Bis(bicyclo[2.2.1]-2-heptyl)chloroborane initialement introduit est de 43%.

### Exemple 6 : procédé de production d'azote ammoniacal à partir de diazote mettant en œuvre le dicyclohexylchloroborane en tant que composé de formule (I) à différentes pressions

Dans un autoclave, 120 mg d'une solution de dicyclohexylchloroborane (1 M dans l'hexane) commercialisée sous la référence 411124 par la société Sigma-Aldrich ont été ajoutés à 4 ml de tétrahydrofurane anhydre, suivis de 15 mg de potassium. L'autoclave a ensuite été scellé. La composition résultante a été mise sous pression (20 bars : exemple 6-1, 40 bars : exemple 6-2 et 80 bars : exemple 6-3) de diazote pur et sec et sous agitation pendant 12 heures. À la fin de la réaction, la couleur du mélange est marron. Un excès de HCl (2 M) dans Et₂O a été ajouté sous atmosphere inerte permettant la conversion quantitive de Hx-N(BCy₂)₃₋ₓ en NH₄⁺ et Cy₂BCl. Les solvants et composés volatils sont éliminés par évaporation, laissant un résidu solide. Ce solide est extrait avec de l'hexane, permettant la séparation de Cy₂BCl de NH₄⁺.

NH₄⁺ est obtenu sous la forme d'un solide blanc. Le rendement par rapport à Cy₂BCl initialement introduit est de :
- 60% pour une pression de 20 bars (exemple 6-1)
- 76% pour une pression de 40 bars (exemple 6-2)
- 94% pour une pression de 80 bars (exemple 6-3).

## Revendications

1. Procédé de production d'azote ammoniacal, l'azote ammoniacal étant choisi parmi l'ammonium (NH₄⁺), l'ammoniac (NH₃), et leur mélange, **caractérisé en ce qu'**il comprend au moins les étapes suivantes :
i) une étape de mise en contact d'une composition comprenant un composé répondant à une formule (I) suivante : R¹R²MY (I), un agent réducteur, et un solvant organique, avec du diazote (N₂),
ladite formule (I) étant telle que :
- M est un élément du groupe 13 du tableau périodique,
- R¹ et R², identiques ou différents, sont choisis parmi un groupe alkyle, un groupe aryle, un groupe aryl-alkyle, un groupe -OR, et un groupe -SR, R étant un groupe alkyle, un groupe aryle, ou un groupe aryl-alkyle, et
- Y est un groupe choisi parmi un halogène -X, un groupe -OR³, un groupe -SR³, un groupe triflate, un groupe mésylate, et un groupe triflimidate, R³ étant un groupe alkyle, un groupe aryle, ou un groupe aryl-alkyle, et
ii) une étape d'hydrolyse en milieu acide.

2. Procédé selon la revendication 1, **caractérisé en ce que** l'élément M est choisi parmi le bore, l'aluminium, et un de leurs mélanges.

3. Procédé selon la revendication 1 ou 2, **caractérisé en ce que** les deux groupes R¹ et R² sont des groupes alkyle.

4. Procédé selon l'une quelconque des revendications précédentes, **caractérisé en ce que** Y est un halogène X.

5. Procédé selon l'une quelconque des revendications précédentes, **caractérisé en ce que** l'agent réducteur est choisi parmi le potassium, le sodium, les amalgames à base de mercure et de sodium, le lithium, et un de leurs mélanges.

6. Procédé selon l'une quelconque des revendications précédentes, **caractérisé en ce que** l'étape i) est effectuée à une température allant de -80°C à 60°C

7. Procédé selon l'une quelconque des revendications précédentes, **caractérisé en ce que** l'agent réducteur utilisé dans l'étape i) représente de 0,1% à 20% en poids, par rapport au poids total de la composition.

8. Procédé selon l'une quelconque des revendications précédentes, **caractérisé en ce que** le composé de formule (I) utilisé dans l'étape i) représente de 0,1% à 10% en poids par rapport au poids total de la composition.

9. Procédé selon l'une quelconque des revendications précédentes, **caractérisé en ce que** l'étape ii) d'hydrolyse en milieu acide est mise en œuvre par mise en contact d'un brut de réaction obtenu à l'étape i) précédente avec une solution acide ou avec un acide gazeux.

10. Procédé selon la revendication 9, **caractérisé en ce que** la solution acide a un pH allant de 0 à 6.

11. Procédé selon l'une quelconque des revendications précédentes, **caractérisé en ce que** le solvant organique de l'étape i) est choisi parmi les solvants organiques aprotiques apolaires.

12. Procédé selon l'une quelconque des revendications précédentes, **caractérisé en ce qu'**il comprend en outre après l'étape i) et avant l'étape ii), une étape i') d'évaporation du solvant organique.

13. Procédé selon l'une quelconque des revendications 1 à 10, **caractérisé en ce que** le solvant organique de l'étape i) est choisi parmi les liquides ioniques.

14. Procédé selon l'une quelconque des revendications précédentes, **caractérisé en ce qu'**il comprend une étape i") de purification après l'étape i) ou l'étape i') si elle existe, par extraction d'un mélange réactionnel formé à l'étape i) ou l'étape i') si elle existe, à l'aide d'un solvant organique apolaire.

15. Utilisation d'un composé de formule (I) tel que défini à l'une quelconque des revendications 1 à 4, pour la réduction du diazote.

## Patentansprüche

1. Verfahren zur Herstellung von Ammoniumstickstoff, wobei der Ammoniumstickstoff unter Ammonium (NH₄⁺), Ammoniak (NH₃) und ihrem Gemisch ausgewählt ist, **dadurch gekennzeichnet, dass** es mindestens die folgenden Schritte umfasst:
i) einen Schritt des Inkontaktbringens einer Zusammensetzung, die eine Verbindung mit der folgenden Formel (I) umfasst: R¹R²MY(I), ein Reduktionsmittel und ein organisches Lösungsmittel, mit Distickstoff (N₂),
wobei die Formel (I) wie folgt lautet: :
- M ist ein Element der Gruppe 13 des Periodensystems,
- R¹ und R², die gleich oder verschieden sind, sind ausgewählt aus einer Alkylgruppe, einer Arylgruppe, einer Arylalkylgruppe, einer OR-Gruppe und einer -SR-Gruppe, wobei R eine Alkylgruppe, eine Arylgruppe oder eine Arylalkylgruppe ist, und
- Y ist eine Gruppe ausgewählt aus einem Halogen -X, einer Gruppe -OR³, einer Gruppe -SR³, einer Triflatgruppe, einer Mesylatgruppe und einer Triflimidatgruppe, wobei R³ eine Alkylgruppe, eine Arylgruppe oder eine Arylalkylgruppe ist, und
ii) einen Schritt der Hydrolyse in einem sauren Medium.

2. Verfahren nach Anspruch 1, gekennzeichnet, dass das Element M aus Bor, Aluminium und einer Mischung davon ausgewählt ist.

3. Verfahren nach Anspruch 1 oder 2, **dadurch gekennzeichnet, dass** die beiden Gruppen R¹ und R² Alkylgruppen sind.

4. Verfahren nach einem der vorhergehenden Ansprüche, **dadurch gekennzeichnet, dass** Y ein Halogen X ist.

5. Verfahren nach einem der vorhergehenden Ansprüche, **dadurch gekennzeichnet, dass** das Reduktionsmittel ausgewählt ist aus Kalium, Natrium, Amalgam auf Quecksilber- und Natriumbasis, Lithium und ihren Mischungen.

6. Verfahren nach einem der vorhergehenden Ansprüche, **dadurch gekennzeichnet, dass** Schritt i) bei einer Temperatur von -80°C bis 60°C durchgeführt wird

7. Verfahren nach einem der vorhergehenden Ansprüche, **dadurch gekennzeichnet, dass** das in Schritt i) verwendete Reduktionsmittel 0,1 Gew.-% bis 20 Gew.-%, bezogen auf das Gesamtgewicht der Zusammensetzung, ausmacht.

8. Verfahren nach einem der vorhergehenden Ansprüche, **dadurch gekennzeichnet, dass** die in Schritt i) verwendete Verbindung der Formel (I) 0,1 Gew.-% bis 10 Gew.-%, bezogen auf das Gesamtgewicht der Zusammensetzung, ausmacht.

9. Verfahren nach einem der vorhergehenden Ansprüche, **dadurch gekennzeichnet, dass** die Hydrolyse in saurem Medium durchgeführt in Schritt ii) wird, indem ein vorhergehender Schritt i) erhaltener Reaktionsrohstoff mit einer Säurelösung oder mit einer gasförmigen Säure.

10. Verfahren nach Anspruch 9, **dadurch gekennzeichnet, dass** die saure Lösung einen pH-Wert im Bereich von 0 bis 6 hat.

11. Verfahren nach einem der vorhergehenden Ansprüche, **dadurch gekennzeichnet, dass** das organische Lösungsmittel in Schritt i) ausgewählt ist aus aprotischen unpolaren organischen Lösungsmitteln.

12. Verfahren nach einem der vorhergehenden Ansprüche, **dadurch gekennzeichnet**, es außerdem nach Schritt i) und vor Schritt ii) einen Schritt i') des Verdampfens des organischen Lösungsmittels umfasst.

13. Verfahren gemäß einem der Ansprüche 1 bis 10, **dadurch gekennzeichnet, dass** das organische Lösungsmittel Schritt i) aus ionischen Flüssigkeiten ausgewählt ist.

14. Verfahren nach einem der vorhergehenden Ansprüche, **dadurch gekennzeichnet, dass** es einen Schritt i") der Reinigung nach Schritt i) oder Schritt i'), falls vorhanden, durch Extraktion eines in Schritt i) oder Schritt i)', falls vorhanden, gebildeten Reaktionsgemisches umfasst, mit einem apolaren organischen Lösungsmittel.

15. Verwendung einer Verbindung der Formel (I), wie einem der Ansprüche 1 bis 4 definiert, zur Reduktion von Distickstoff.

## Claims

1. A process for producing ammoniacal nitrogen, the ammoniacal nitrogen being selected from ammonium (NH₄⁺), ammonia (NH₃), and a mixture thereof, **characterised in that** it comprises at least the following steps:
i) a step of bringing a composition comprising a compound responding to a following formula (I): R¹R²MY (I), a reducing agent, and an organic solvent, into contact with dinitrogen (N₂),
said formula (I) being such that:
- M is an element of group 13 of the periodic table,
- R¹ and R², identical or different, are selected from an alkyl group, an aryl group, an aryl-alkyl group, an -OR group and an -SR group, R being an alkyl group, an aryl group or an aryl-alkyl group, and
- Y is a group selected from a halogen -X, an -OR³ group, an -SR³ group, a triflate group, a mesylate group, and a triflimidate group, R³ being an alkyl group, an aryl group, or an aryl-alkyl group, and
ii) a hydrolysis step in acidic medium.

2. The process according to claim 1, **characterised in that** the element M is selected from boron, aluminium and a mixture thereof.

3. The process according to claim 1 or 2, **characterised in that** the two groups R¹ and R² are alkyl groups.

4. The process according to any of the preceding claims, **characterised in that** Y is a halogen X.

5. The process according to any of the preceding claims, **characterised in that** the reducing agent is selected from potassium, sodium, mercury- and sodium-based amalgams, lithium, and a mixture thereof.

6. The process according to any of the preceding claims, **characterised in that** step i) is carried out at a temperature ranging from -80°C to 60°C.

7. The process according to any of the preceding claims, **characterised in that** the reducing agent used in step i) represents from 0.1% to 20% by weight, relative to the total weight of the composition.

8. The process according to any of the preceding claims, **characterised in that** the compound of formula (I) used in step i) represents from 0.1% to 10% by weight relative to the total weight of the composition.

9. The process according to any of the preceding claims, **characterised in that** step ii) of hydrolysis in acidic medium is implemented by bringing a reaction crude obtained in preceding step i) into contact with an acidic solution or with a gaseous acid.

10. The process according to claim 9, **characterised in that** the acidic solution has a pH ranging from 0 to 6.

11. The process according to any of the preceding claims, **characterised in that** the organic solvent of step i) is selected from apolar aprotic organic solvents.

12. The process according to any of the preceding claims, **characterised in that** it further comprises, after step i) and before step ii), a step i') of evaporating the organic solvent.

13. The process according to any of claims 1 to 10, **characterised in that** the organic solvent of step i) is selected from ionic liquids.

14. The process according to any of the preceding claims, **characterised in that** it comprises a purification step i") after step i) or step i') if present, by extracting a reaction mixture formed in step i) or step i') if present, using an apolar organic solvent.

15. Use of a compound of formula (I) as defined in any of claims 1 to 4, for dinitrogen reduction.
